# EUROPEAN PATENT APPLICATION

(11) **EP 1 939 719 A2**
(43) Date of publication of application: **02.07.2008**
(21) Application number: 07117746.3
(22) Date of filing: 02.10.2007
(51) Int. Cl.: G06F 3/048

(54) **Method for Providing Menu and Multimedia Device Using the Same**

(30) Priority: 28.12.2006 KR 20060136715; 28.12.2006 KR 20060136716; 28.12.2006 KR 20060136717
(71) Applicant: Samsung Electronics Co., Ltd., Suwon-si, Gyeonggi-Do (KR)
(72) Inventor: Kim, Hyun-chung, Seoul (KR); Lee, Eun-hye, Seoul (KR)
(74) Representative: Grünecker, Kinkeldey, Stockmair & Schwanhäusser Anwaltssozietät

(57) **Abstract**

A method for providing a menu and a multimedia device using the method are provided. The method for providing a menu includes converting a menu set including at least one icon displayed on a touch screen into a manipulation set including at least one manipulation icon used to input a command relating to the use of content. Therefore, the method provides for a more easily manipulated menu, which is displayed with superior visual effect on a screen that is relatively small in size by using the menu set capable of conversion into the manipulation set.

## Description

### BACKGROUND OF THE INVENTION

### 1. Field of the Invention

Aspects of present invention relate to a method for providing a menu, and more particularly, to a method for providing a menu through a touch screen of a multimedia device which performs various functions.

### 2. Description of the Related Art

Recently, the range of functions of multimedia devices has increased, which has enabled the implementation of video apparatuses with remarkably developed digital technologies. Because multimedia devices have many functions, methods for using multimedia devices are diverse and complicated. Additionally, a large number of menus are provided through screens for users due to having so many functions. However, since portable multimedia devices have small screens, it is important to more efficiently provide diverse and complicated menus. In addition, there is a need for menus which can be easily manipulated by a user and which have excellent visual effects.

### SUMMARY OF THE INVENTION

Aspects of the present invention provide a method for providing a menu and a multimedia device using the method in which a user can be provided with a menu which enables easy manipulation and which is displayed with superior visual effect on a screen that is relatively small in size using a menu set capable of being converted into a manipulation set.

According to an aspect of the present invention, there is provided a method for providing a menu comprising displaying a menu set comprising at least one icon on a touch screen; and converting the menu set into a manipulation set comprising at least one manipulation icon to input a command relating to use of content and displaying the manipulation set. The converting may comprise converting the menu set into the manipulation set and displaying the converted set if there is a specific manipulation by a user on the touch screen.

According to an aspect of the present invention the menu set may comprise at least one menu icon indicating at least one menu item, and a control icon used to input a control command relating to display of the menu set. The specific manipulation of the user may be touching the control icon for a predetermined period of time. The outline shape of the icons contained in the menu set may be the same as that of the icons contained in the manipulation set.

According to an aspect of the present invention the command relating to playback of content may be at least one selected from among a playback/stop command, a pause command, a fast-forward command, a rewind command, a volume-up command, a volume-down command, a channel-up command and a channel-down command relating to the content. If the content is one of music content and moving image content, the command relating to playback of content may comprise a playback/stop command, a fast-forward command, a rewind command, a volume-up command and a volume-down command. If the content is broadcasting content, the command relating to playback of content may comprise a volume-up command, a volume-down command, a channel-up command and a channel-down command.

According to another aspect of the present invention, there is provided a method for displaying a menu using a touch screen, comprising displaying a menu icon set comprising two or more menu icons; displaying a manipulation icon set comprising two or more manipulation icons to input a control command relating to menu items of the menu icon set; selecting one of the menu icon set and the manipulation icon set; and displaying the selected icon set.

According to an aspect of the present invention the menu icon set may comprise at least two selected from among icons indicating search, game, recording, music, movie, photograph, document and digital multimedia broadcasting (DMB) menu items. The manipulation icon set may comprise four direction keys to control menu items of the menu icon set.

Aspects of the present invention provide a method for providing a menu and a multimedia device using the method in which a menu which a user can more easily manipulate and which provides excellent visual effect may be provided on a screen that is relatively small in size, using a menu set comprising changeable menu items.

According to an aspect of the present invention, there is provided a method for providing a menu comprising displaying on a touch screen a menu set comprising at least one menu icon indicating at least one menu item; and changing a first menu icon indicating a first menu item contained in the menu set to a second menu icon indicating a second menu item, and displaying the changed icon.

According to an aspect of the present invention the changing may comprise displaying a menu list in which menu items are arranged, if a user selects the first menu icon displayed on the touch screen; and changing the first menu icon to the second menu icon indicating the second menu item and displaying the changed icon, if the user selects the second menu item from among the menu items arranged on the displayed menu list. The user may select the first menu icon by touching the first menu icon for a predetermined period of time. The user may select the second menu item by touching the second menu icon displayed on the menu list. At least one menu icon contained in the menu set may remain unchanged even if the types of menu items displayed on a menu screen displayed on the touch screen are changed.

According to another aspect of the present invention, there is provided a method for displaying a menu using a touch screen, comprising displaying a menu set comprising two or more icons comprising a menu icon indicating a menu item and a control icon to control the menu icon; and changing a first menu icon indicating a first menu item contained in the menu set to a second menu icon indicating a second menu item, and displaying the changed icon.

Aspects of the present invention provide a method for providing a menu and a multimedia device using the method in which a content list is provided by user touching a touch screen in order to provide a menu which enables easier manipulation and effectively shows the menu items.

According to an aspect of the present invention, there is provided a method for providing a menu, comprising detecting contact of a touch screen by a user; and displaying a content list on the touch screen if it is detected that the user touches the touch screen. The displaying may comprise displaying the content list if it is detected that the user touches a region of the touch screen on which icons are not displayed. The displaying may comprise displaying the content list on a region adjacent to a region touched by the user.

According to an aspect of the present invention the content list may be a list regarding one selected from among content that has been recently played back, newly acquired content, and content with a high playback frequency. The content list may be a list regarding content selected by the user from among content that has been recently played back, newly acquired content, and content with a high playback frequency. The content list may be a list regarding at least one of Internet websites that have been recently accessed and Internet websites a user frequently accesses.

According to an aspect of the present invention the contact of the touch screen by the user may be performed by touching one lattice from among lattices displayed on the touch screen. The method may further comprise displaying the touched lattice so that the touched lattice may become larger than other lattices.

According to an aspect of the present invention the method may further comprise displaying lattices spaced from the touched lattice at a first distance so that the lattices spaced from the touched lattice at the first distance may become larger than lattices spaced from the touched lattice at a second distance. The first distance may be shorter than the second distance.

According to another aspect of the present invention, there is provided a method for providing a menu using a touch screen, comprising displaying a menu set comprising two or more icons comprising a menu icon indicating a menu item and a control icon to control the menu icon; detecting contact of the touch screen by a user; and displaying a content list on the touch screen if it is detected that the user touches the touch screen.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will be more apparent and more readily appreciated from the following description of the embodiments, taken in conjunction with the accompanying drawings of which:
FIGs. 1 A to 1C are views illustrating a movable menu set according to an aspect of the present invention;
FIGs. 2A to 2C are views illustrating a process for changing a display state of the menu set according to an aspect of the present invention;
FIGs. 3A to 3D are views illustrating in detail the menu set according to an aspect of the present invention;
FIGs. 4A and 4B are views illustrating a process for changing lattices displayed on a touch screen when a user touches the touch screen according to an aspect of the present invention;
FIGs. 5A to 5D are views illustrating a process for executing a command corresponding to a menu item using a menu icon of a menu set, and a process for changing the display state of the menu set when executing the command corresponding to the menu item according to an aspect of the present invention;
FIGs. 6A and 6B are views illustrating another process for changing the display state of the menu set according to an aspect of the present invention;
FIGs. 7A and 7B are views illustrating a process for moving directly to another menu item using the menu set while executing a command corresponding to a specific menu item according to an aspect of the present invention;
FIGs. 8A and 8B are views illustrating a process for converting a menu set into a manipulation set and displaying the manipulation set when a content player and the menu set are displayed on a touch screen according to an aspect of the present invention;
FIGs. 9A and 9B are views illustrating a process for changing a menu item identified by a menu icon to another menu item according to an aspect of the present invention;
FIGs. 10A and 10B are views illustrating a process for displaying a list of content that has been recently played back according to an aspect of the present invention; and
FIG. 11 is a block diagram of a multimedia device capable of providing a graphical user interface (GUI) which is implemented using the menu set described above according to an aspect of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

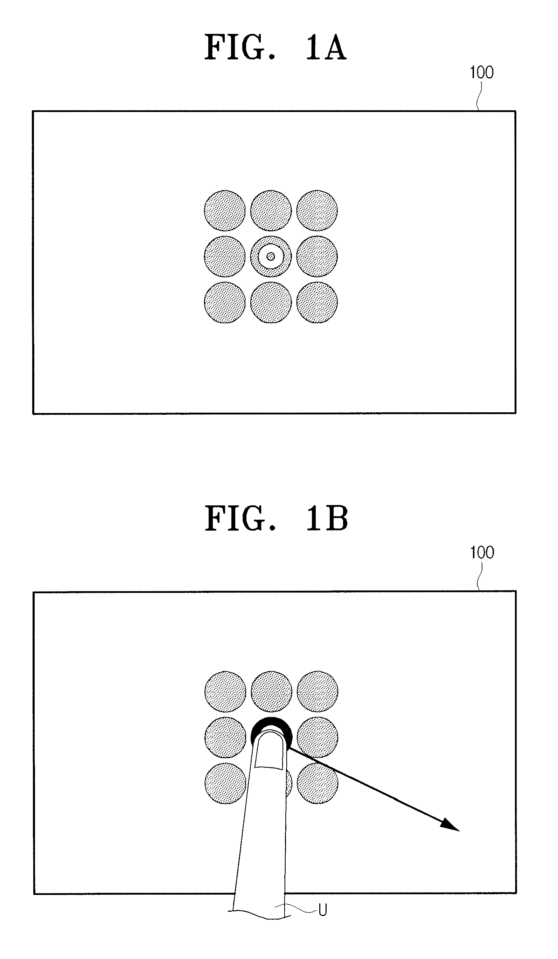

FIGs. 1 A to 1C are views to explain a movable menu set according to an aspect of the present invention. FIG. 1A shows the movable menu set (hereinafter, simply referred to as a "menu set") displayed on a touch screen 100. As shown, the menu set comprises nine icons. However, the menu set may comprise any number of icons and can be arranged in a nonsymmetrical as well as a symmetric pattern as shown.

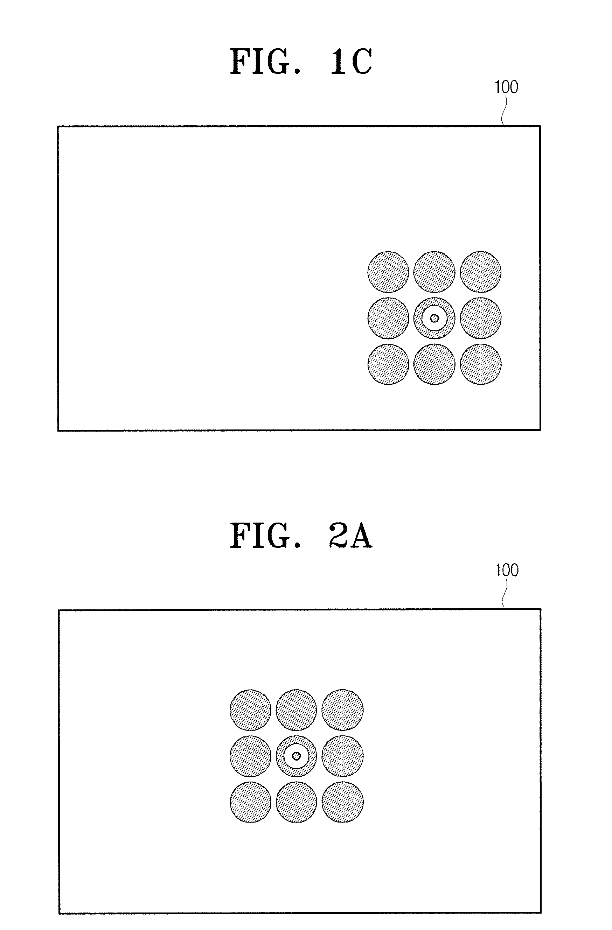

The menu set is moveable on the touch screen 100. The menu set may move to a position as shown in FIG. 1C by a drag operation performed by a user U as shown in FIG. 1 B. More specifically, if the user U drags an "icon placed at the center of the menu set" (hereinafter, simply referred to as a "central icon" or moveable control icon") to a desired position, the menu set may move by being dragged across the touch screen 100 and be repositioned about the central icon. As the menu set moves, outlines, full images, no image, or an image of some of the nine icons may be displayed. As shown, the control icon is moveable within the entire screen 100 and is not limited to a particular side. However, while described as using the central icon, the moveable control icon can be any of the displayed icons and need not be the central icon in all aspects.

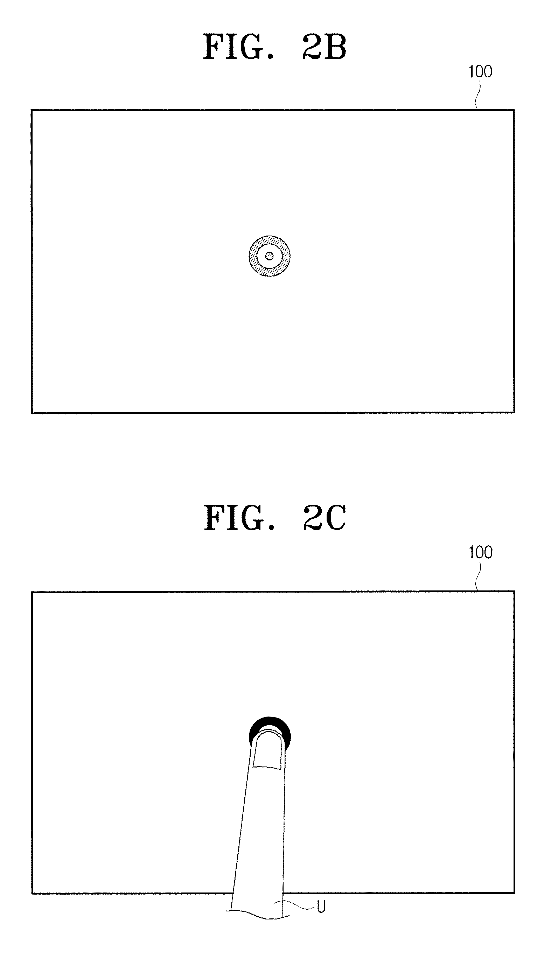

Additionally, the display state of the menu set may be changed according to an aspect of the present invention. A process for changing the display state of the menu set will be described in detail with reference to FIGs. 2A to 2C according to an aspect of the present invention. If the user U touches the central icon when the menu set is displayed on the touch screen 100 as shown in FIG. 2A, icons of the menu set, except for the central icon, may disappear from the touch screen 100 as shown in FIG. 2B. In other words, only the central icon may remain on the touch screen 100. Accordingly, the number of icons displayed on the touch screen 100 may be reduced by touching the central icon of the menu set. Alternatively, if a predetermined period of time has elapsed without any manipulation by the user U when the menu set is displayed on the touch screen 100, only the central icon may remain on the touch screen 100. While not required, the control icon can be other than at the center and can be the same icon as the icon used to move the menu set as in FIGs. 1A to 1C. However, the control icon can be other than the control icon as shown in FIG. 1A, such as when multiple control icons are used to move the menu set or manipulate the display.

Further, if the user U touches the central icon again when only the central icon appears on the touch screen 100 as shown in FIG. 2C, the icons that had disappeared may again be displayed on the touch screen 100 so as to display the menu set as shown in FIG. 2A. In other words, the menu set may again be displayed on the touch screen 100. Therefore, the number of icons displayed on the touch screen 100 may be increased by touching the central icon displayed on the touch screen 100 by the user U. However, the increasing or decreasing the number of icons displayed on the touch screen 100 is not limited thereto; for example, the user U may touch or tap the touch screen 100 in a predetermined manner, such as tapping twice, to increase or decrease the number of the icons of the menu set displayed on the touch screen.

In addition, other commands may be effected using the menu set such that the menu set may provide multiple functions depending upon a number of times the same menu icon is touched or a length of time that the menu icon is touched. Further, the menu icons may provide for locking or unlocking of the device through a series of touches of the menu icons.

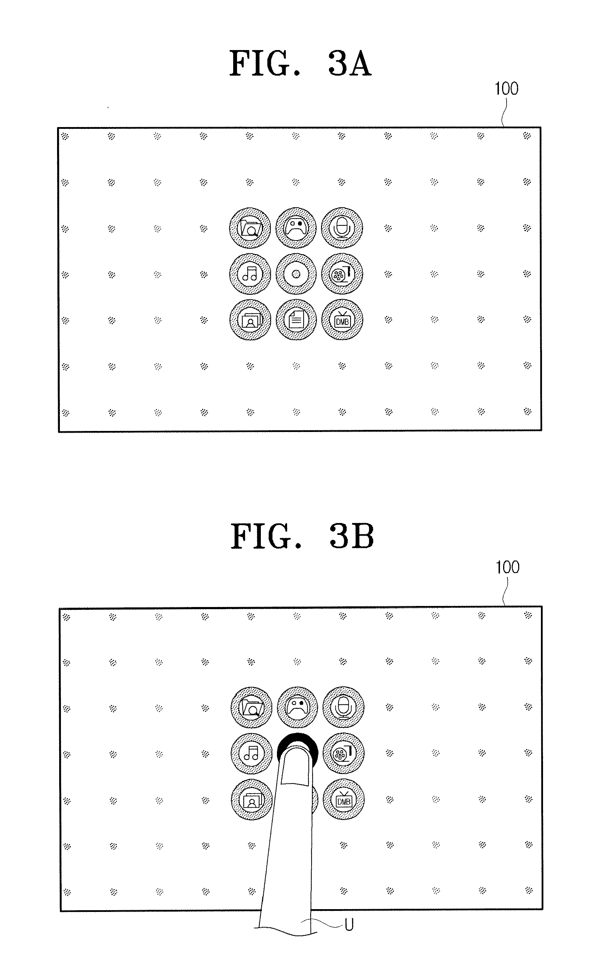

FIGs. 3A to 3D are detailed views of the menu set according to an aspect of the present invention. FIG. 3A shows the menu set of FIG. 1A in greater detail, and the menu set of FIG. 3A may also comprise nine icons but is not limited thereto. As shown in FIG. 3A, the nine icons may have the same size, and the outlines of the icons may have the same circular shape; however, the size, the outlines, and the number of icons is also not limited thereto.

An icon in the center of the menu set may be a "control icon", and the other eight icons, excluding the icon control icon of the menu set, may be "menu icons". The control icon may correspond to the central icon as described in reference to FIG. 1A but can be otherwise located relative to the menu icons.

The "menu icons" refer to icons indicating menu items (that is, icons used to input commands to execute commands corresponding to menu items). The menu icons of FIG. 3A may comprise icons indicating search, game, recording, music, movie, photograph, document, and digital multimedia broadcasting (DMB) menu items. However again, the menu items are not limited thereto and may be customizable by the user to include other icons indicating such input commands as associated with messaging, phone calling, emailing, a personal planner, a calendar, a map or GPS, help, information, or emergency services.

The control icon allows for input of a "control command relating to display of the menu set". The "control command relating to display of the menu set" may comprise a "command to move the menu set", a "command to change the display state of the menu set", or other commands. For example, the control icon (central icon) may be dragged to a desired position in response to the "command to move the menu set" as input by the user U as shown in FIGs. 1A to 1C.

Additionally, the "command to change the display state of the menu set" causes the menu icons to disappear from the touch screen 100 by touching the control icon (central icon) of the menu set, or enables the menu icons that have disappeared to again be displayed on the touch screen 100 by touching the control icon displayed on the screen. Accordingly, the display state of the menu set may be identified by the appearance or disappearance of a portion of the icons contained in the menu set.

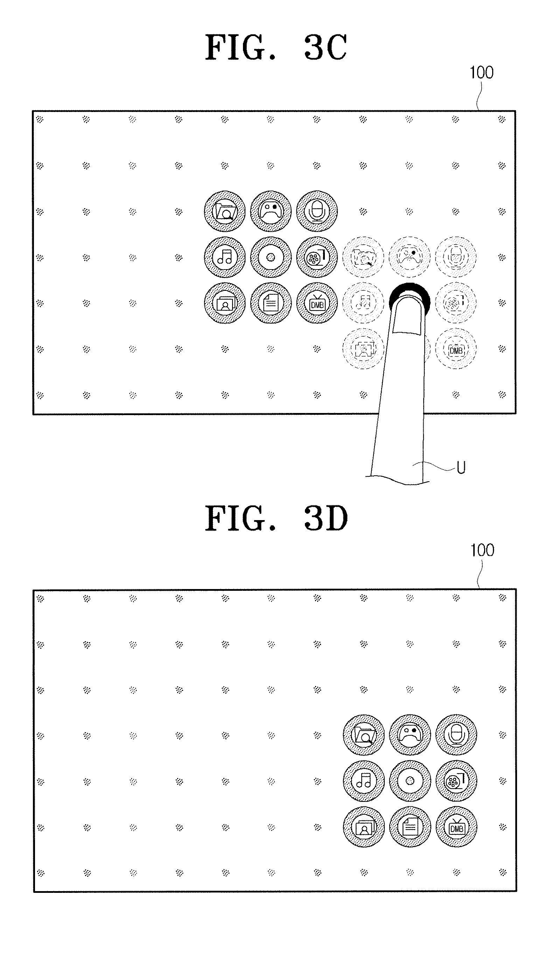

Referring to FIG. 3A, a lattice pattern may be disposed at regular intervals on the touch screen 100. Positions in which the icons of the menu set are displayed on the touch screen 100 may be identified by the lattice pattern. Accordingly, if the user U starts to drag the control icon as shown in FIG. 3B and stops to drag the control icon as shown in FIG. 3C, the control icon may move to a lattice placed at the drag end position as shown in FIG. 3D and the menu icons may move to lattices neighboring the control icon, and thus the menu set may be moved. As such, the menu set may snap to the nearest or most logical, given a direction of the dragging, lattice pattern on the touch screen 100 such that if there is no lattice position at the drag end position, the control icon may move to a lattice position closest to the drag end position, and the menu icons may move to lattices neighboring the control icon. The menu set may thereby be moved to a new position on the touch screen 100. As shown, the lattice is over the entire touch screen 100 and is disposed at intervals roughly corresponding to relative location of the menu icons. However, it is understood that the lattice can be finer than the distance between adjacent menu icons and can be nonuniform in spacing.

If the dragging of the menu set is terminated before the user U removes contact from the touch screen 100 as shown in FIG. 3C, the menu icons may be displayed semi-transparently at lattices in which the menu icons may be placed if the user U removes contact from the touch screen 100.

The process for moving the menu set by the dragging operation of the user U has been described above. However, the menu set may be moved by operations other than the dragging operation of the user U. For example, if the user U touches the control icon as shown in FIG. 3B, and then touches another lattice in which the control icon is not placed as shown in FIG. 3C, the control icon may move to the other touched lattice and the menu icons may move to lattices neighboring the control icon as shown in FIG. 3D, and accordingly it is possible to move the menu set. Further, the user U may tap the control icon and then double-tap another location on the touch screen 100 to move the menu set without dragging. Alternatively, if the user U touches the control icon and then drags the control icon a short distance in a specific direction, the control icon may move to a lattice placed in the specific direction among lattices adjacent to the control icon, and the menu icons may move to lattices neighboring the control icon, and accordingly it is possible to move the menu set. Further, the user need not directly touch the touch screen 100, such as when a stylus or pointing device is used to touch the touch screen 100.

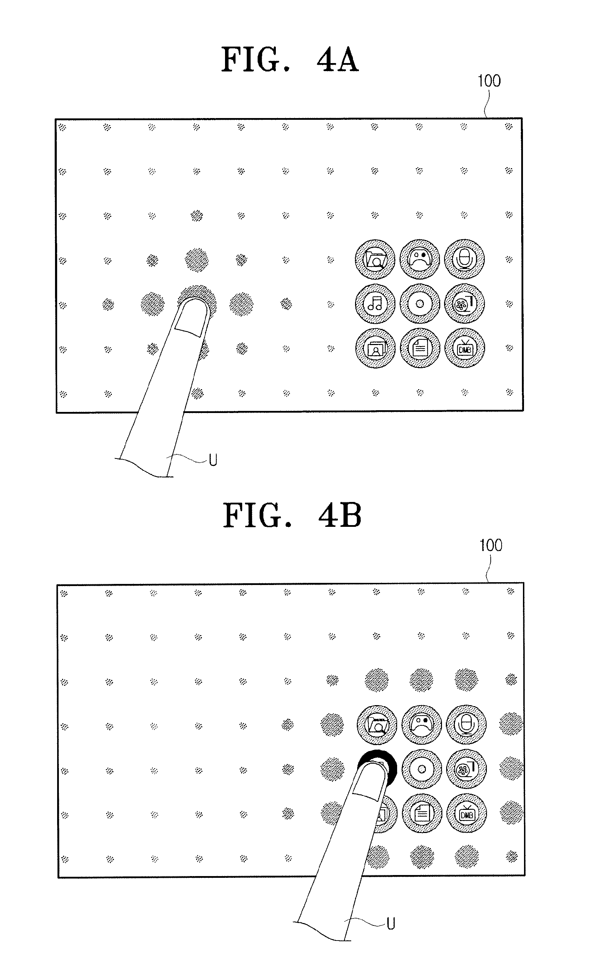

Hereinafter, a process for changing lattices displayed on the touch screen 100 when the user U touches the touch screen 100 will be described in detail with reference to FIGs. 4A and 4B according to an aspect of the present invention. Although the lattices are described as being displayed on the touch screen 100, the lattices may exist in the touch screen 100 so that the menu set may be moved between different set positions but the lattices may be semi-transparent or completely transparent. In FIG. 4A, the size of the lattice touched by the user U may become larger than those of other lattices. Additionally, lattices closest to the touched lattice (lattices placed at an upper edge, a lower edge, a left edge, and a right edge of the touched lattice) may become smaller than the touched lattice, but may be larger than other lattices, excluding the touched lattice. In other words, when the user U touches the touch screen 100, the sizes of lattices appearing on the touch screen 100 may be changed. The touched lattice, the lattices closest to the touched lattice, and lattices adjacent to the lattices closest to the touched lattice are ordered in size from largest to smallest. As such, the lattices having the ordered size allow the user U to see where the menu set is to be moved; for example, the user U may touch the touch screen 100, with a finger or a stylus, etc., so that the lattices order in size at which point the user U may see where the menu set is to move upon a second touch of the touch screen 100. Also, the larger lattice elements allow for additional locations into which the menu set or control icon can be moved, so as to allow for finer movement relative to the touched location.

In addition, if the user U touches the menu icon as shown in FIG. 4B, the sizes of lattices adjacent to the menu set may be changed. Specifically, the sizes of the lattices closest to the menu set (lattices placed at an upper edge, a lower edge, a left edge, and a right edge of the menu set) may become larger. The lattices adjacent to the lattices closest to the menu set (lattices placed at an upper edge, a lower edge, a left edge, and a right edge of the lattices closest to the menu set) may be slightly smaller in size than the lattices closest to the menu set. As such, the lattices provide indication of a new location to which the menu set is to be moved; for example, if the user U moves the menu set by only a small distance, the lattices provide an indication of the new location. Also, the larger lattice elements allow for additional locations into which the menu set or control icon can be moved, so as to allow for finer movement relative to the touched location.

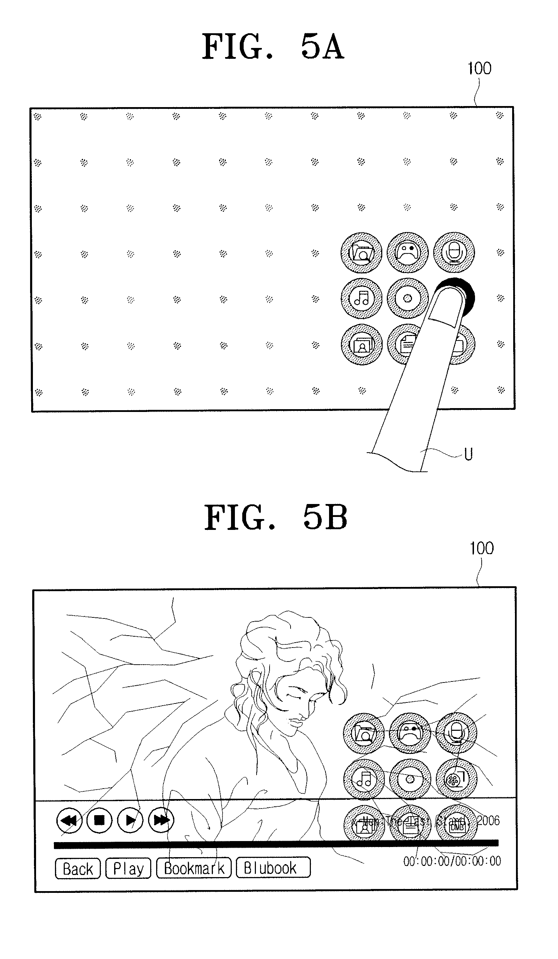

Hereinafter, a process for executing a command corresponding to a menu item identified by a menu icon using the menu icon of the menu set, and a process for changing the display state of the menu set when executing the command corresponding to the menu item will be described in detail with reference to FIGs. 5A to 5D.

If the user U touches a menu icon, a command corresponding to a menu item identified by the menu icon may be executed. For example, if the user U touches a movie menu icon as shown in FIG. 5A, the movie menu item may be activated, and a moving image player may appear on the touch screen 100 in response to the selection of the movie menu item, as shown in FIG. 5B. Additionally, the menu set may become semi-transparent to allow the user to view a moving image played back through the touch screen 100 displaying the moving image player as shown, or the menu set might disappear to allow an unobstructed view.

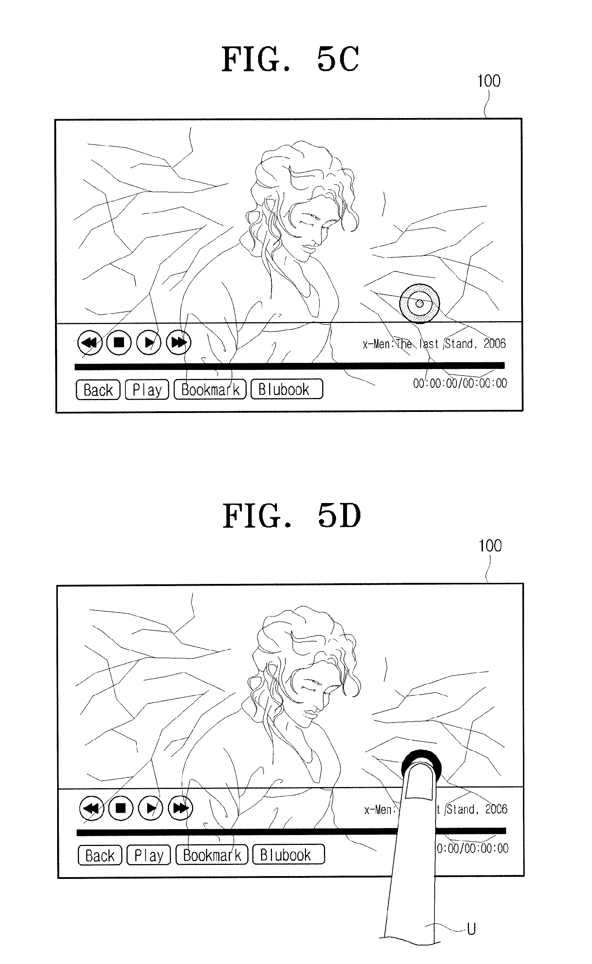

If the user U does not perform any manipulation for a predetermined period of time after the moving image player appears, only the semi-transparent control icon may be left on the touch screen 100, as shown in FIG. 5C. In other words, the semi-transparent menu icons may disappear from the touch screen 100. Or, if the user U touches the semi-transparent central icon when the semi-transparent menu set is displayed on the touch screen 100 together with the moving image player as shown in FIG. 5B, the other semi-transparent menu icons may disappear leaving only the semi-transparent control icon displayed on the touch screen 100, as shown in FIG. 5C. In addition, if the user U touches the semi-transparent control icon as shown in FIG. 5D when the semi-transparent control icon is displayed on the touch screen 100 together with the moving image player as shown in FIG. 5C, the semi-transparent menu set may again appear on the touch screen 100 as shown in FIG. 5B.

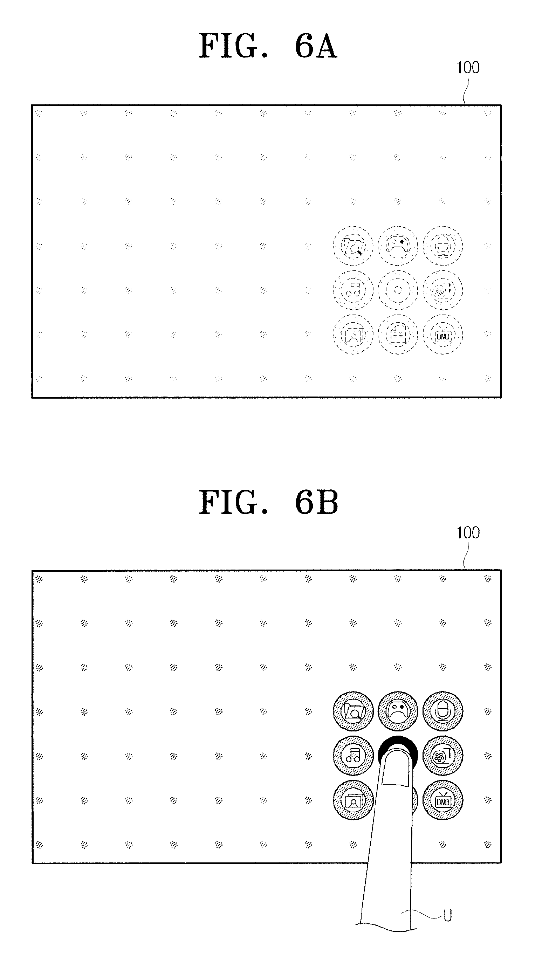

Another process for changing the display state of the menu set is described in detail below with reference to FIGs. 6A and 6B according to an aspect of the present invention. If there is no manipulation by the user U for a predetermined period of time in a situation when the menu set is displayed on the touch screen 100, the menu set may become semi-transparent (or faintly visible) as shown in FIG. 6A. Additionally, if the user U touches the semi-transparent control icon when the semi-transparent menu set is displayed on the touch screen 100 as shown in FIG. 6A, the non-transparent (or clearly visible) menu set may again appear on the touch screen 100 as shown in FIG. 6B.

On the other hand, if the user U does not perform any manipulation for a predetermined period of time in a situation when the semi-transparent menu set is displayed on the touch screen 100 as shown in FIG. 6A, only the semi-transparent control icon may remain on the touch screen 100. Alternatively, if the user U does not perform any manipulation for a predetermined period of time in a situation when the semi-transparent menu set is displayed on the touch screen 100 as shown in FIG. 6A, the entire semi-transparent menu set (including the control icon) may disappear from the touch screen 100.

The above-described processes may be applied to a situation in which the semi-transparent menu set is displayed on the touch screen 100 along with an execution screen corresponding to a specific menu item. Specifically, if there is no manipulation by the user U for a predetermined period of time when the semi-transparent menu set is displayed on the touch screen 100 along with the execution screen, menu blocks displayed on the execution screen may disappear together with the menu set. For example, if the user U does not perform any manipulation for a predetermined period of time in a situation when the moving image player in response to the selection of the movie menu item is displayed on the touch screen 100 together with the semi-transparent menu set as shown in FIG. 5B, the menu blocks, such as the buttons back, play, bookmark, stop (square), and fast forward (double triangle), at the bottom of the touch screen 100 of FIG. 5B, which are required to play back the moving image, may disappear together with the semi-transparent menu set. Further, if the user U touches regions on the touch screen 100 in which the menu blocks and menu set are not displayed, the menu blocks together with the menu set may also disappear. Again, the manipulation of the menu set and execution screen are not limited thereto such that a user U may tap the touch screen 100 twice so as to make the menu set or the menu blocks turn semi-transparent or disappear. Further, the menu set and the menu blocks may be moved or dragged during the operation of the execution screen in a similar manner as described above.

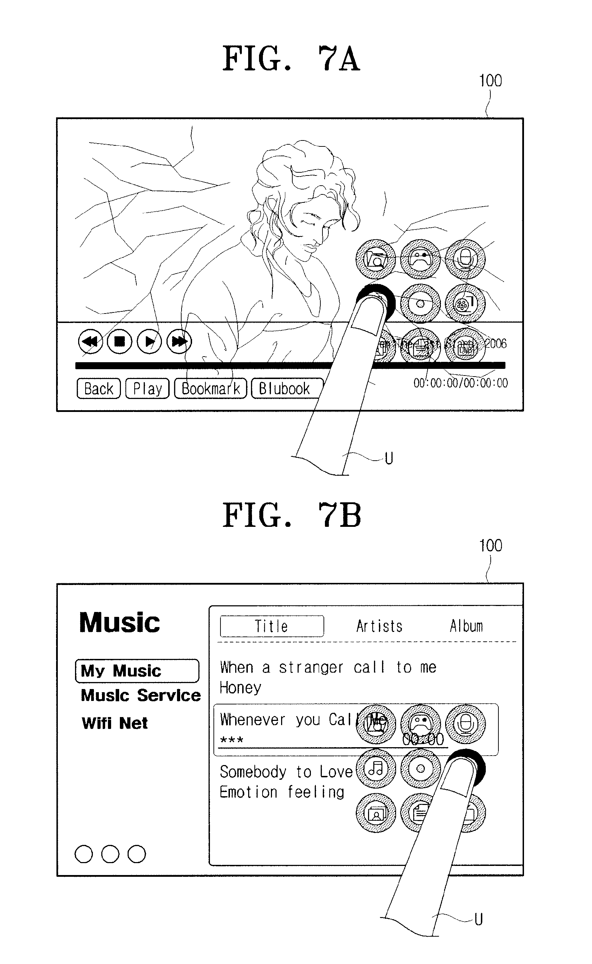

A process for moving directly to another menu item using the menu set while executing a command corresponding to a specific menu item will now be described in detail with reference to FIGs. 7A and 7B. FIG. 7A, according to an aspect of the present invention, shows the touch screen 100 on which the moving image player appears in response to the selection of the movie menu item. The menu set is displayed in semi-transparent form on the touch screen 100. In other words, the menu set is displayed to overlap or on top of the moving image player.

The menu set may comprise a control icon and menu icons indicating the uppermost menu items as described above. In other words, the menu items identified by the menu icons of the menu set, for example search, game, recording, music, movie, photograph, document and DMB menu items, among others, may be the uppermost menu items.

If the menu icons of the menu set displayed on the touch screen 100 maintain the same menu icons in the same menu set regardless of the type of execution screen displayed on the touch screen 100, the user may execute a command corresponding to the uppermost menu item to enable an execution screen for the uppermost menu item to be activated on the touch screen 100, without searching for a menu item several times. Accordingly, the user U may touch the menu icon appearing in the menu set, and thus an execution screen for an uppermost menu item identified by the touched menu icon may be displayed on the touch screen 100.

For example, if the user U touches the icon indicating the music menu item when the moving image player and the menu set are displayed on the touch screen 100 as shown in FIG. 7A, an audio player may appear on the touch screen 100 in response to the selection of the music menu item as shown in FIG. 7B. In the same manner, if the user U touches the icon indicating the movie menu item when the audio player and the menu set are displayed on the touch screen 100 as shown in FIG. 7B, the moving image player may appear on the touch screen 100 in response to the selection of the movie menu item as shown in FIG. 7A.

If an icon indicating a menu item relating to content playback is touched by the user U, it is possible to directly display on the touch screen 100 a content player which plays back content starting from the last playback time among content that has been recently played back through the content player in response to the selection of the menu item or another content player which is initiated to play back content starting from the last playback time.

Additionally, if a menu icon touched by the user U is the icon indicating the menu item relating to content playback, a list of content playable in a content player may be directly displayed on the touch screen 100. Content, herein, may refer to a moving image such as music or a movie, an audio track, a text file or message, an internet file or web page, a call history, a phone book, a map, a list, a still image, such as a picture, or any other moving, interactive, or still information. The menu icon for each type of content may be a music menu icon, a movie menu icon, a picture menu icon, or any menu icon relating to the content.

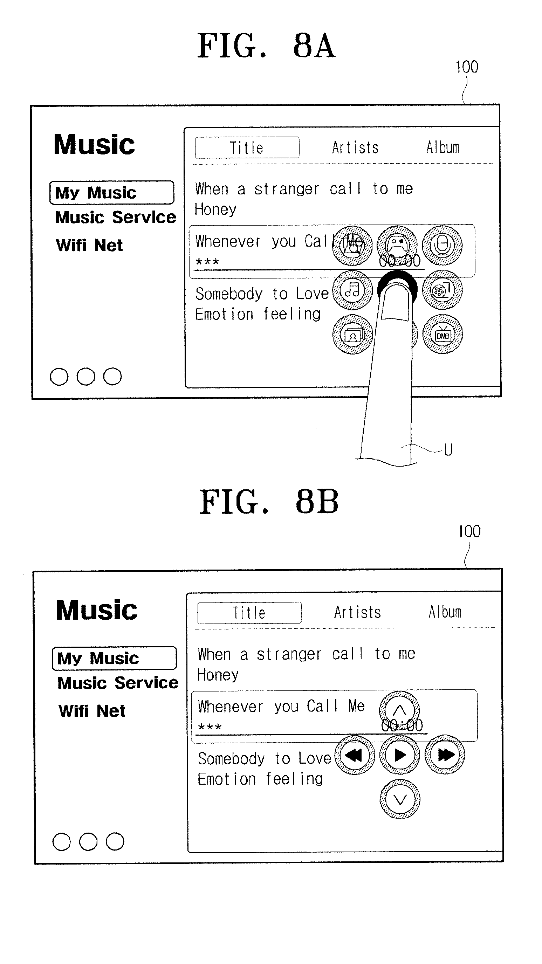

Hereinafter, a process for converting the menu set into a manipulation set and displaying the manipulation set when the content player and menu set are displayed on the touch screen 100 according to an aspect of the present invention will be described with reference to FIGs. 8A and 8B. The manipulation set may be a combination of manipulation icons to input commands relating to content playback.

If the user U touches the control icon for a predetermined period of time when the audio player appears on the touch screen 100 along with the menu set as shown in FIG. 8A, the menu set may be converted into the manipulation set for operating the audio player as shown in FIG. 8B. The action "sustained touch" is an action in which a finger of the user U remains in contact with the icon for a predetermined period of time after the finger of the user U has initially come into contact with the icon.

If the user U touches a manipulation icon placed at the center of the manipulation set for a predetermined period of time when the audio player along with the manipulation set are displayed on the touch screen 100 as shown in FIG. 8B, the manipulation set may change back to the menu set shown in FIG. 8A. The sustained touch by the user U of the control icon of the menu set causes the touch screen 100 to display the menu set to the manipulation set, and the sustained touch by the user U of the manipulation icon at the center of the manipulation set causes the touch screen 100 to display the menu set.

Referring to FIG. 8B, the manipulation set of the audio player may comprise five manipulation icons but is not limited thereto. In addition, the five manipulation icons may have the same size, and outlines of the icons may have the same circular shape. Further, the size and outline shape of the manipulation icons may be the same as those of the menu icons (or the control icon). If needed, the size and outline shape of the manipulation icons may be different from those of the menu icons (or the control icon). Also, the size of the manipulation icons may change similar to the changing of sizes of the menu set.

Referring to FIG. 8B, the manipulation set of the audio player may comprise manipulation icons to input a Music playback/stop command, a fast-forward command, a rewind command, a volume-up command, and a volume-down command. However, the manipulation set may comprise different types of manipulation icons according to the type of content player. For example, a manipulation set for a DMB player may comprise manipulation icons to input a volume-up command, a volume-down command, a channel-up command, and a channel-down command. The moving image player may have the same manipulation set as that of the audio player. Further, other commands may be included such as pause or record, or a same manipulation icon may be operated using different touches by the user U. For example, the same manipulation icon may provide multiple functions depending upon a number of times the same manipulation icon is touched or a length of time that the manipulation icon is touched. Moreover, the manipulation icons may provide for locking or unlocking of the device through a series of touches of the manipulation icons to thereby provide security. Further, the manipulation set might include alphanumeric keys to allow input information and/or typing of text.

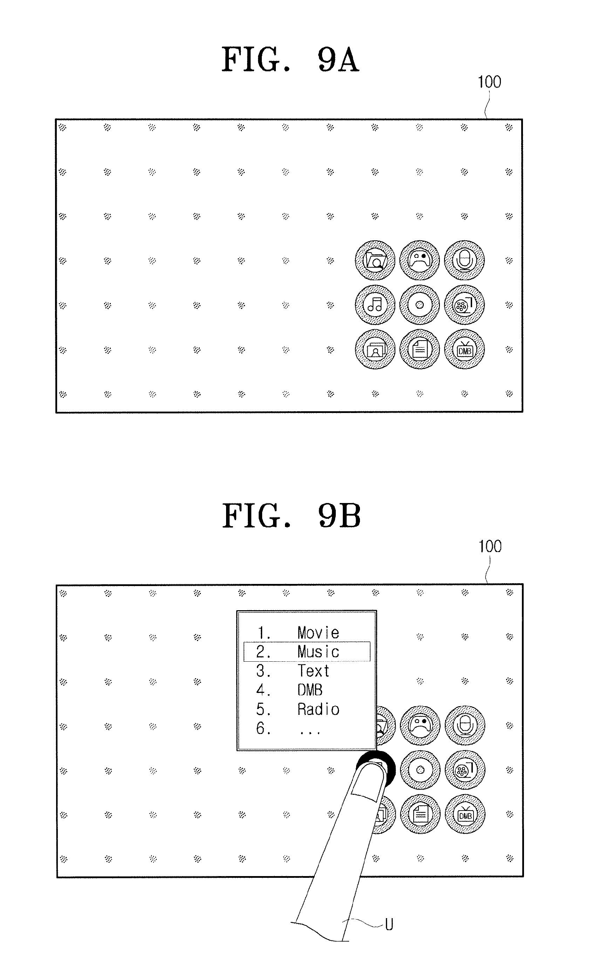

A process for changing a menu item identified by a menu icon to another menu item will be now described in detail with reference to FIGs. 9A and 9B. If the user U touches a menu icon for a predetermined period of time when the menu set is displayed on the touch screen 100 as shown in FIG. 9A, a menu list may be displayed on a region neighboring the touched menu icon as shown in FIG. 9B. At this time, if the user U touches one menu item from among menu items of the menu list, the menu icon may change to an icon indicating the touched menu item. For example, if the user U touches a radio menu item from among menu items of the menu list displayed after the user U touches the music menu icon for a predetermined period of time as shown in FIG. 9B, the music menu icon may be changed to a radio menu icon indicating the radio menu item.

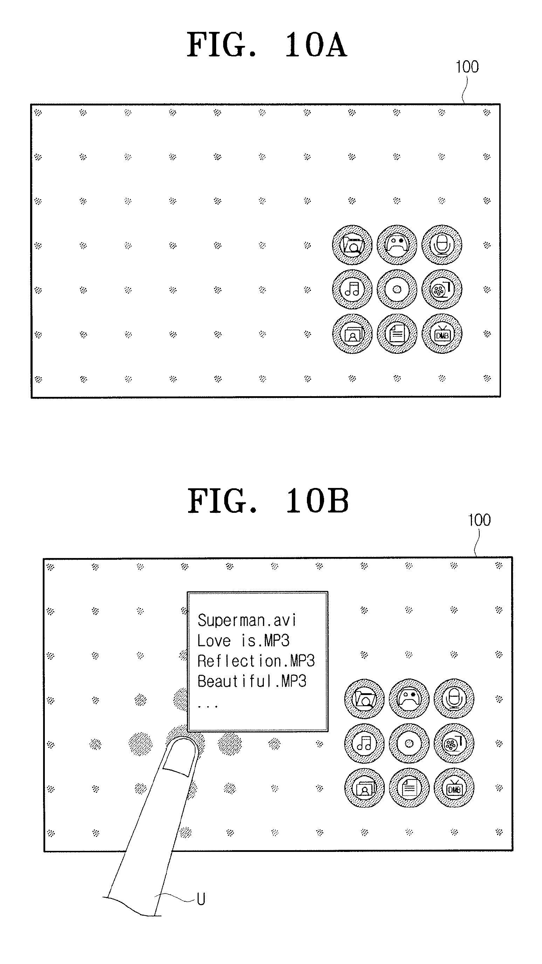

Hereinafter, a process for displaying a list of content that has been recently played back according to an aspect of the present invention will be described in detail with reference to FIGs. 10A and 10B. If the user U touches for a predetermined period of time a lattice in which the menu set does not exist when the lattices are arranged and displayed on the touch screen 100 as shown in FIG. 10A, the "list of content that has been recently played back" (hereinafter, simply referred to as a "content list") may be displayed on a region adjacent to the touched lattice as shown in FIG. 10B. In this situation, if the user U touches the content selected from among the content of the content list, the touched content may be played back. For example, if the user U touches "Superman.avi" from among the content of the content list displayed after touching the touch screen 100 for a predetermined period of time at a lattice from among lattices displayed on the touch screen 100 as shown in FIG. 10B, a moving image player which plays back the "Superman.avi" may appear on the touch screen 100. The "Superman.avi" may be played back starting at the beginning or starting from where the file was recently stopped.

The lattice touched for a predetermined period of time by the user U may become larger than other lattices, as shown in FIG. 10B. Additionally, lattices closest to the lattice touched for a predetermined period of time (lattices placed at an upper edge, a lower edge, a left edge, and a right edge of the lattice touched for a predetermined period of time) may be smaller than the lattice touched for a predetermined period of time, but larger than other lattices. In other words, when the user U touches the touch screen 100 for a predetermined period of time, the sizes of lattices appearing on the touch screen 100 may change. The lattice touched for a predetermined period of time, the lattices closest to the lattice touched for a predetermined period of time, and lattices adjacent to the lattices closest to the lattice touched for a predetermined period of time are ordered in size from largest to smallest.

In addition to the list of content that has been recently played back, it is possible to display a list of newly acquired content or a list of content with a high playback frequency. Additionally, the user U may set the type of lists displayed when the user U touches the touch screen 100 for a predetermined period of time at the lattice in which the menu set does not exist. Further, the user U may designate portions of the touch screen 100 to touch for a predetermined period of time to display different menus. For example, an upper left quadrant of the display, when touched for the predetermined period of time, may display the content that has been played recently; while, a lower left quadrant of the display, when touched for the predetermined period of time, may display the newly acquired content. Furthermore, if the user U touches a portion of the lattice in which the menu set does not exist for a predetermined period of time, a list of Internet websites that have been recently accessed or a list of Internet websites a user frequently accesses may also be displayed on the touch screen 100.

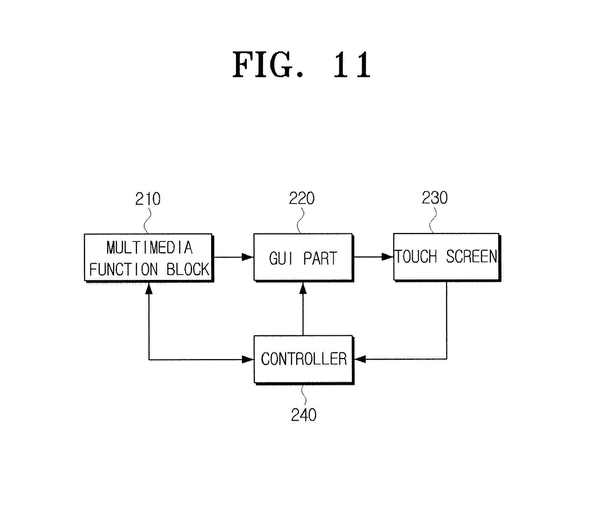

FIG. 11 is a block diagram of a multimedia device capable of providing a graphical user interface (GUI) which is implemented using the menu set described above. In FIG. 11, the multimedia device comprises a multimedia function block 210, a GUI part 220, a touch screen 230, and a controller 240. While not required, the device can be a portable handheld device, such as a media player, phone, or PDA. However, the device can also be implemented on a computer, such as a portable or nonportable computer.

The multimedia function block 210 may perform original functions of the multimedia device, such as file searching, gaming, recording, music playback, movie playback, picture playback, document preparation, DMB playback, picture taking, telephoning, or other functions.

The GUI part 220 may add a GUI implemented using the menu set to an image generated by the multimedia function block 210. The image to which the GUI implemented using the menu set output from the GUI part 220 is added may be displayed on the touch screen 230. Additionally, the touch screen 230 is used to input the actions of the user U, such as "touch", "sustained touch", "drag" or other actions.

The controller 240 may control the operations for performing functions of the multimedia function block 210 according to a user's manipulation input through the touch screen 230 or other manipulating devices such as buttons, switches, knobs, keys, dials, etc. (not shown). Additionally, the controller 240 may control the GUI part 220 so that a GUI provided in response to the user's manipulation may be displayed on the touch screen 230. Specifically, if a user inputs through the touch screen 230 a command to move the menu set, the controller 240 may control the GUI part 220 so that the menu set may be moved and displayed in response to the input command. If the user inputs through the touch screen 230 a command to change the display state of the menu set, the controller 240 may control the GUI part 220 so that the display state of the menu set may be changed to be displayed in response to the input command.

In addition, if the user does not input any manipulation command for a predetermined period of time through the touch screen 230, the controller 240 may also control the GUI part 220 so that the display state of the menu set may be changed or that the device becomes locked. Furthermore, if the user touches a lattice displayed on the touch screen 230, the controller 240 may permit the GUI part 220 to change the display state of the lattices, or to display the menu list or the content list in a region neighboring the touched lattice.

The controller 240 may also control the GUI part 220 so that the menu set may be converted into the manipulation set and the converted manipulation set may be displayed. In addition, the controller 240 may control the operations for performing functions of the multimedia function block 210 so that a command corresponding to the menu item touched by the user can be executed.

As described above, according to aspects of the present invention, a user can be provided with a menu which can be manipulated more easily, and which is displayed with superior visual effect on a screen that is relatively small in size, using a menu set capable of being converted into a manipulation set. According to aspects of the present invention, a menu which the user can more easily manipulate, and which provides superior visual effect, may be also provided on a screen that is relatively small in size, using a menu set comprising changeable menu items. Furthermore, according to aspects of the present invention, the content list is provided by touching the touch screen, and thus it is also possible to display a menu which can be manipulated more easily, and which effectively shows the menu items.

While not required, it is understood that aspects of the present invention can be implemented as computer software encoded on one or more computer readable media for use with one or more computers and/or processors.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A method for providing a menu, comprising:
displaying a menu set comprising at least one icon on a touch screen; and
converting the menu set into a manipulation set comprising at least one manipulation icon to input a command relating to use of content; and
displaying the manipulation set.

2. The method of claim 1, wherein the converting comprises converting the menu set into the manipulation set and further comprising displaying the manipulation set if there is a specific manipulation by a user on the touch screen.

3. The method of claim 2, wherein
the menu set comprises at least one menu icon indicating at least one menu item, and a control icon used to input a control command relating to the displaying of the menu set; and
the specific manipulation of the user is touching the control icon for a predetermined period of time.

4. The method of claim 1, wherein an outline shape of the at least one icon of the menu set is the same as an outline shape of the at least one manipulation icon of the manipulation set.

5. The method of claim 1, wherein the command relating to playback of content is at least one of a playback/stop command, a pause command, a fast-forward command, a rewind command, a volume-up command, a volume-down command, a channel-up command, a channel-down command, or combinations thereof.

6. The method of claim 1, wherein, if the content is one of music content and moving image content, the command relating to playback of content comprises a playback/stop command, a fast-forward command, a rewind command, a volume-up command, a volume-down command, or combinations thereof.

7. The method of claim 1, wherein, if the content is broadcasting content, the command relating to playback of content comprises a volume-up command, a volume-down command, a channel-up command, a channel-down command, or combinations thereof.

8. A method for displaying a menu using a touch screen, comprising:
displaying a menu icon set comprising two or more menu icons;
displaying a manipulation icon set comprising two or more manipulation icons to input a control command relating to menu items of the menu icon set;
executing an input command to select one of the menu icon set and the manipulation icon set; and
displaying the selected icon set.

9. The method of claim 8, wherein the menu icon set comprises at least two icons selectable between a search menu item, a game menu item, a recording menu item, a music menu item, a movie menu item, a photograph menu item, a document menu item, and a digital multimedia broadcasting (DMB) menu item; and
the manipulation icon set comprises four direction keys to control the menu items of the menu icon set.

10. A method for providing a menu, comprising:
displaying on a touch screen a menu set comprising at least one menu icons indicating at least one menu items;
changing a first menu icon indicating a first menu item of the menu set to a second menu icon indicating a second menu item; and
displaying the changed menu icon in the menu set.

11. The method of claim 10, wherein the changing comprises:
displaying a menu list in which menu items are arranged, if a user selects the first menu icon displayed on the touch screen; and
changing the first menu icon to the second menu icon and displaying the changed icon, if the user selects the second menu item from among the menu items arranged on the displayed menu list.

12. The method of claim 11, wherein the user selects the first menu icon by touching the first menu icon for a predetermined period of time.

13. The method of claim 11, wherein the user selects the second menu item by touching the second menu icon displayed on the menu list.

14. The method of claim 10, wherein at least one menu icon contained in the menu set remains unchanged even if the types of menu items displayed on a menu screen displayed on the touch screen are changed.

15. A method for displaying a menu using a touch screen, comprising:
displaying a menu set comprising two or more icons, comprising a menu icon indicating a menu item and a control icon to control the menu icon; and
changing a first menu icon indicating a first menu item contained in the menu set to a second menu icon indicating a second menu item, anddisplaying the changed icon.

16. A method for providing a menu, comprising:
detecting contact of a touch screen by a user; and
displaying a content list on the touch screen if it is detected that the user touches the touch screen.

17. The method of claim 16, wherein the displaying the content list comprises displaying the content list if it is detected that the user touches a region of the touch screen on which the menu set is not displayed.

18. The method of claim 16, wherein the displaying the content list comprises displaying the content list on a region adjacent to a region touched by the user.

19. The method of claim 16, wherein the content list is a list comprising at least one of content that has been recently played back, newly acquired content, content with a high playback frequency, or combinations thereof.

20. The method of claim 19, wherein the content list is a list comprising content selected by the user, the content being at least one of content that has been recently played back, newly acquired content, content with a high playback frequency, or combinations thereof.

21. The method of claim 16, wherein the content list is a list comprising at least one of Internet websites that have been recently accessed, Internet websites a user frequently accesses, or combinations thereof.

22. The method of claim 16, wherein the contact of the touch screen by the user is performed by touching a lattice of a predetermined lattice pattern displayed on the touch screen; and
the method further comprises displaying the touched lattice so that the touched lattice is larger than other lattices.

23. The method of claim 22, further comprising displaying first lattices spaced from the touched lattice at a first distance so that the first lattices are larger than second lattices spaced from the touched lattice at a second distance,
wherein the first distance is shorter than the second distance.

24. A method for providing a menu using a touch screen, comprising:
displaying a menu set comprising two or more icons comprising a menu icon indicating a menu item and a control icon to control the menu icon;
detecting contact of the touch screen by a user; and
displaying a content list on the touch screen if it is detected that the user touches the touch screen.

25. The method of claim 1, wherein the moveable menu set is moveable between a predetermined lattice pattern.

26. The method of claim 1, wherein the manipulation set is moveable.

27. A computer-readable medium encoded with processing instructions implementing the method of claim 1 performed by a computer.

28. The method of claim 8, wherein the arrangement of the two or more menu icons about the control icon is selectable by a user.

29. The method of claim 8, wherein the two or more menu icons are arranged about the control icon at predetermined distances.

30. The method of claim 29, wherein the control icon and the two or more menu icons change sizes when the control icon is selected such that the control icon is larger than the menu icons at a predetermined first distance and the menu icons at a predetermined first distance are large than the menu icons at a predetermined second distance.

31. The method of claim 8, wherein the two or more menu icons become semi-transparent a predetermined period of time after the execution of the input command.

32. The method of claim 8, wherein the two or more menu icons excluding the control icon become semi-transparent a predetermined period of time after the execution of the input command.

33. The method of claim 8, wherein the two or more menu icons excluding the control icon become transparent a predetermined period of time after the execution of the input command.

34. A multimedia device, comprising:
a touch screen to display content, to display a moveable menu set via a graphical user interface, and to accept input commands using at least one menu item of the moveable menu set;
a multimedia function block to provide the content and the at least the menu set; and
a controller to control the graphical user interface according to the input commands, to convert the menu set to a manipulation set according to a first input to the menu set, and to control the menu set to be moved anywhere on the touch screen according to a second input of at least one menu item of the displayed menu set.
